# EUROPÄISCHE PATENTANMELDUNG

(11) **EP 1 391 630 A1**
(43) Veröffentlichungstag der Anmeldung: **25.02.2004**
(21) Anmeldenummer: 03011690.9
(22) Anmeldetag: 23.05.2003
(51) Int. Cl.: F16F 9/05

(54) **Luftfeder mit einem an einem Abrollrohr befestigten Rollbalg**

(30) Priorität: 23.08.2002 DE 10238666
(71) Anmelder: AUDI AG, 85045 Ingolstadt (DE)
(72) Erfinder: Brandl, Hans, 86706 Weichering (DE)
(74) Vertreter: Asch, Konrad

(57) **Zusammenfassung**

Die Erfindung betrifft eine Luftfeder (10) mit einem an einem Abrollrohr (16) befestigten Rollbalg (12), der mit seiner einen Fläche - Abrollfläche - an einer zugeordneten Fläche - Anlagefläche - des Abrollrohres (16) mit zunehmender Kompression der Luftfeder (10) bereichsweise zum Anliegen kommt. Die Erfindung zeichnet sich dadurch aus, dass die Anlagefläche des Abrollrohres (16) durch ein Federelement (26) gebildet wird.

## Beschreibung

Die Erfindung betrifft eine Luftfeder mit einem an einem Abrollrohr befestigten Rollbalg gemäß der im Oberbegriff des Anspruches 1 angegebenen Art.

Eine derartige Luftfeder ist beispielsweise aus der DE 100 04 122 A1 bekannt. Hierbei ist ein Rollbalg mit einem Abrollrohr verbunden. Mit seiner Außenfläche kommt der Rollbalg auf der Außenseite des Abrollrohres mit zunehmender Kompression der Luftfeder bereichsweise zum Anliegen. Das Abrollrohr besteht aus einem Grundkörper und einen den Grundkörper umgebenden Mantel, der als Drainage ausgebildet ist. Die Bildung eines Korrosion begünstigenden Wasserfilms auf dem Rollbalg wird durch die Drainage verhindert. Die Drainage besteht aus Vertiefungen oder Kanälen und gewährleistet einen Abfluss über eine Öffnung oder über mehrere in der Wand des Abrollrohrs angeordnete Öffnungen.

Aus der DE 100 60 824 A1 ist ebenfalls eine gattungsgemäße Luftfeder bekannt. Die Außenseite des Abrollrohrs, die einer Außenfläche des Rollbalgs zugeordnet ist, der auf der Außenseite mit zunehmender Kompression der Luftfeder zum Anliegen kommt, ist profiliert ausgebildet, d.h., es sind Einkerbungen/Vorsprünge vorgesehen.

Durch die Profilierung wird eine Reduzierung des Eigengewichts des Abrollrohrs erreicht.

Derartige Luftfedern finden beispielsweise als Fahrzeugfederungen vor allem bei Lastkraftwagen, aber auch bei Personenkraftwagen Verwendung. Die von dem Rollbalg auf das unter Druck stehende Abrollrohr radial ausgeübten Kräfte werden dabei von der Außenseite des Abrollrohrs aufgenommen. Beim Einfederungsvorgang rollt der Rollbalg mehr oder weniger auf der Außenseite des Abrollrohrs auf und ab.

Problematisch bei dieser Art der Federung ist jedoch ein unzureichender Abrollkomfort im Bereich höherfrequenter Anregung - Rauigkeit, Harshness-Verhalten - durch dynamisch hohe Steifigkeiten der Rollbälge. Eine deutliche Verbesserung des Abrollkomforts konnte nach dem Stand der Technik dadurch erreicht werden, indem man den Rollbalg am Außenumfang durch einen Zylinder abstützte. Durch diese Maßnahme lassen sich sehr viel weichere Rollbälge einsetzen, die nicht die störende dynamische Verhärtung zeigen. Nachteilig ist allerdings ein deutlich größerer Bauraumbedarf und eine durch den Zylinder sich ergebende Gewichtserhöhung.

Der Erfindung liegt die Aufgabe zugrunde, eine Luftfeder mit einem an einem Abrollrohr befestigten Rollbalg gemäß der im Oberbegriff des Anspruches 1 angegebenen Art derart weiterzubilden, dass unter Vermeidung der genannten Nachteile das Abrollverhalten verbessert und die bei der Kompression auftretenden Schwingungen über den Rollbalg vermindert werden.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch Vorsehen eines der Abrollfläche des Rollbalgs zugeordneten Federelementes die beim Abrollen entstehenden Schwingungen erheblich verringert werden können.

Nach der Erfindung weist die Luftfeder daher einen an einem Abrollrohr befestigten Rollbalg auf, der mit seiner einen Fläche - Abrollfläche - an einer zugeordneten Fläche - Anlagefläche - des Abrollrohres mit zunehmender Kompression der Luftfeder bereichsweise zum Anliegen kommt, wobei die Anlagefläche des Abrollrohres durch ein Federelement gebildet wird. Aufgabe dieses Federelementes ist es, den Rollbalg in Querrichtung, also in Richtung der steifen umlaufenden Falte, weich gegen das Abrollrohr abzustützen und damit die dynamische Steifigkeit dieser Falte deutlich zu reduzieren.

Insbesondere bildet dabei die Anlagefläche die Außenseite des Abrollrohres und die Abrollfläche die Außenseite des Rollbalges.

Vorzugsweise ist das Federelement zumindest in radialer Richtung in Bezug auf das Abrollrohr wirksam. Beim Abrollen lassen sich somit die höherfrequenten durch den Kompressionsvorgang der Luftfeder induzierten Anregungen im Bereich von etwa 25 bis 100 Herz, die sonst auf die Karosserie übertragen werden, erheblich dämpfen.

Gemäß einer Ausführungsform der Erfindung ist das Federelement auf einen Grundkörper des Abrollrohrs aufgebracht und dabei vorzugsweise lösbar mit dem Grundkörper verbunden. Hierdurch können durch Auswahl des Federelements, beispielsweise nach Art des Werkstoffes, die Federkennlinien für die Dämpfung des Rollbalges beim Abrollen, also bei zunehmender Kompression der Luftfeder, einfach festgelegt werden.

Um ein einfaches Anordnen des Federelements am Grundkörper zu ermöglichen, weist der Grundkörper eine Aufnahme auf, in die das Federelement formschlüssig zumindest im Hinblick auf die axiale Erstreckung des Grundkörpers eingebracht ist. Eine einfache Montage und Demontage wird dadurch gewährleistet.

Der Werkstoff des schwingungs- und geräuschisolierenden Federelements kann aufgrund der hierfür günstigen Eigenschaften vorzugsweise Zellpolyuretan sein. Es können aber auch andere nachgiebige Werkstoffe, wie Elastomer, Gummi und ähnliches, für die Ausbildung des Federelementes verwendet werden.

Zudem lässt sich durch Formgebung, nämlich Profilierung, des Federelements sowohl der Kontaktfläche zum Rollbalg als auch der Kontaktfläche zum Grundkörper des Abrollrohres oder einer Kontaktfläche von beiden die dämpfenden Eigenschaften des Federelementes erhöhen.

Gemäß einer Ausführungsform der Erfindung ist der Grundkörper des Abrollrohres mit einer Basis verbunden, von der er sich senkrecht nach oben erstreckt. Um diesen Grundkörper vor mechanischer Einwirkung zu schützen, bedeckt das Federelement vollständig die Außenseite des Grundkörpers.

Damit beispielsweise der Forderung nach einem besseren Korrosionsschutz nachgekommen werden kann, ist das Federelement als Drainage ausgebildet, die eine oder mehrere Öffnungen im unteren Bereich zum Abfluss von Fluiden aufweist. Das Federelement kann dabei entsprechend der in der DE 100 04 122 A1 offenbarten Gestaltung ausgebildet sein.

Weitere Vorteile und Merkmale ergeben sich aus der Beschreibung einer Ausführungsform der Erfindung im Zusammenhang mit der Zeichnung. Es zeigen:
- Fig. 1: eine Querschnittsansicht einer Hälfte einer Luftfeder nach der Erfindung, und
- Fig. 2: eine Querschnittsansicht durch eine Hälfte einer Luftfeder nach dem Stand der Technik.

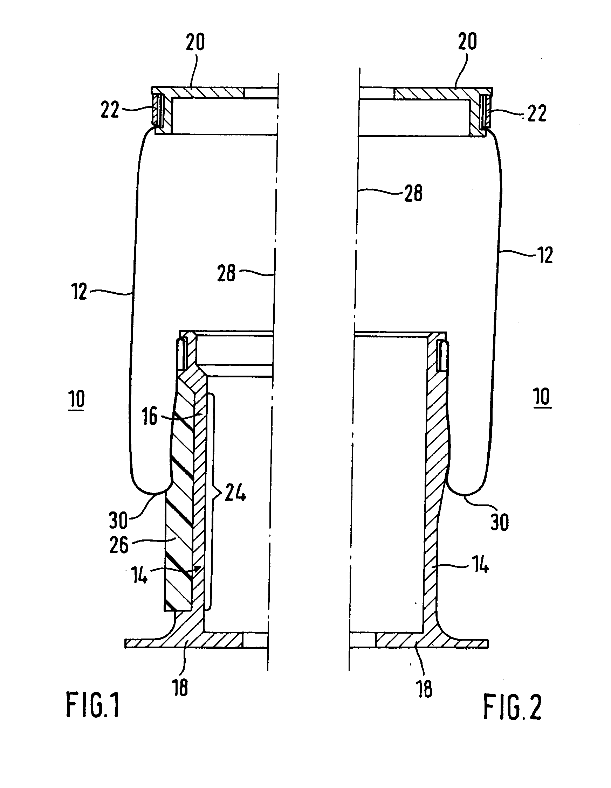

In Fig. 1 ist in einer Querschnittsansicht eine Luftfeder 10 in einer Hälfte dargestellt, wohingegen in Fig. 2 ebenfalls eine Luftfeder 10 jedoch nach dem Stand der Technik dargestellt ist.

Die in den Fig. 1 und 2 dargestellten Luftfedern 10 weisen für gleiche Teile gleiche Bezugszeichen auf. Die Gegenüberstellung verdeutlicht den Unterschied zum Stand der Technik.

Die Luftfeder 10 ist mit einem Rollbalg 12 versehen, der an einem Grundkörper eines Abrollrohres 16 befestigt ist. Der Grundkörper 14 ist zylindrisch ausgebildet und erstreckt sich von einer scheibenartig ausgebildeten Basis 18 senkrecht nach oben.

An seinem dem Grundkörper entfernt gelegenen Ende ist der Rollbalg 12 mit einem Auflager 20 verbunden.

Die Basis 18 kann dabei achs- bzw. radseitig beim Fahrzeug und das Auflager 20 am Fahrzeugrahmen bzw. Chassis befestigt sein.

Über einen Spannring 22 ist der Rollbalg 12 fest mit dem Auflager 20 verbunden.

Das Abrollrohr 16 nach der Erfindung ist mit einer Aufnahme 24 im Grundkörper 14 versehen, in die ein den Grundkörper 14 vollständig mantelförmig umgreifendes Federelement 26 eingebracht ist. Die Aufnahme 24 wird dabei durch einen Rücksprung des zylinderförmigen Abrollrohres 16 gebildet, wobei der Rücksprung im oberen Bereich der Aufnahme 24 schräg verläuft. Das Federelement 26 wird in der Aufnahme 24 formschlüssig in axialer Richtung gehalten.

Das Federelement 26 ist im Hinblick auf die mit den Bezugszeichen 28 gekennzeichnete Mittelachse 28 der Luftfeder 10 konzentrisch angeordnet und radial nach außen, insbesondere in Richtung der unteren Falte 30 des Rollbalgs 12, wirksam.

Mit zunehmender Kompression der Luftfeder 10, also mit Bewegung des Auflagers 20 in Richtung auf die Basis 18, rollt der Rollbalg 12 mit seiner Außenfläche - Abrollfläche - auf der zugeordneten Fläche des Federelements 26 - Anlagefläche - ab. Mit Hilfe des Federelements 26 werden möglicherweise durch das Abrollen des Rollbalgs 12 auf der Anlagefläche auftretende Schwingungen gedämpft, indem das Federelement 26 komprimiert wird, siehe Fig. 1.

Im Gegensatz zu dieser Ausbildung rollt der Rollbalg 12 nach dem Stand der Technik auf der Außenseite des Abrollrohres 16 ohne Dämpfung ab. Hierdurch entstehen störende Schwingungen, siehe Fig. 2.

Gemäß einer hier nicht dargestellten Ausführungsform der Erfindung kann das Federelement als Drainage ausgebildet sein, um möglicherweise auf dem Rollbalg 12 sich bildende Wasserfilme abzuführen. Ebenso kann die Oberfläche des Federelements 26 oder die innere Kontaktfläche des Federelements 26 zum Grundkörper 14 profiliert ausgebildet sein.

Die Erfindung zeichnet sich durch die einfache Möglichkeit aus, bei der Kompression der Luftfeder 10 mögliche Schwingungen von vornherein zu unterbinden.

### BEZUGSZEICHENLISTE

- 10: Luftfeder
- 12: Rollbalg
- 14: Grundkörper
- 16: Abrollrohr
- 18: Basis
- 20: Auflager
- 22: Spannring
- 24: Aufnahme
- 26: Federelement
- 28: Mittelachse
- 30: Falte des Rollbalgs

## Patentansprüche

1. Luftfeder (10) mit einem an einem Abrollrohr (16) befestigten Rollbalg (12), der mit seiner einen Fläche - Abrollfläche - an einer zugeordneten Fläche - Anlagefläche - des Abrollrohres (16) mit zunehmender Kompression der Luftfeder (10) bereichsweise zum Anliegen kommt, **dadurch gekennzeichnet, dass** die Anlagefläche des Abrollrohres (16) durch ein Federelement (26) gebildet wird.

2. Luftfeder nach Anspruch 1, **dadurch gekennzeichnet, dass** die Anlagefläche die Außenseite des Abrollrohres (16) und die Abrollfläche die Außenseite des Rollbalges (12) bildet.

3. Luftfeder nach Anspruch 1 oder 2, **dadurch gekennzeichnet, dass** das Federelement (26) zumindest in radialer Richtung in Bezug auf das Abrollrohr (16) wirksam ist.

4. Luftfeder nach einem der vorangehenden Ansprüche, **dadurch gekennzeichnet, dass** das Federelement (26) auf einen Grundkörper (14) des Abrollrohrs (16) aufgebracht ist.

5. Luftfeder nach Anspruch 4, **dadurch gekennzeichnet, dass** das Federelement (26) lösbar mit dem Grundkörper (14) verbunden ist.

6. Luftfeder nach Anspruch 4 oder 5, **dadurch gekennzeichnet, dass** der Grundkörper (14) eine Aufnahme (24) aufweist, in die das Federelement formschlüssig zumindest im Hinblick auf die axiale Erstreckung des Grundkörpers (14) eingebracht ist.

7. Luftfeder nach einem der vorangehenden Ansprüche, **dadurch gekennzeichnet, dass** das Federelement (26) aus einem Zellpolyuretan, Elastomer, Gummi und/oder ähnlichem besteht.

8. Luftfeder nach einem der vorangehenden Ansprüche, **dadurch gekennzeichnet, dass** die Außenseite und/oder Innenseite des Federelements (26) profiliert ausgebildet ist.

9. Luftfeder nach einem der vorangehenden Ansprüche, **dadurch gekennzeichnet, dass** der Grundkörper (14) des Abrollrohres (16) mit einer Basis verbunden ist, von der er sich senkrecht noch oben erstreckt.

10. Luftfeder nach Anspruch 9, **dadurch gekennzeichnet, dass** die Außenseite des Grundkörpers (14) vollständig mit dem Federelement (26) bedeckt ist.

11. Luftfeder nach einen der vorangehenden Ansprüche, **dadurch gekennzeichnet, dass** das Federelement (26) als Drainage ausgebildet ist, die einen oder mehrere Öffnungen im unteren Bereich zum Abfluss von Fluiden aufweist.
